# EUROPEAN PATENT SPECIFICATION

(11) **EP 4 077 223 B1**
(45) Date of publication and mention of the grant of the patent: **24.09.2025**
(21) Application number: 20903436.2
(22) Date of filing: 11.12.2020
(51) Int. Cl.: C02F 1/48, C02F 1/461, B01J 20/28, B01J 20/20, C02F 1/36, C02F 1/28, B01J 20/34, B01J 20/16, C02F 103/08, C02F 1/52, C02F 1/02, C02F 1/00

(54) **METHOD AND DEVICE FOR WATER PURIFICATION**
VERFAHREN UND VORRICHTUNG ZUR WASSERREINIGUNG
PROCÉDÉ ET DISPOSITIF DE PURIFICATION D'EAU

(30) Priority: 20.12.2019 FI 20196114
(43) Date of publication of application: 26.10.2022
(73) Proprietor: Prima Carbo Solutions Oy, 98900 Salla (FI)
(72) Inventor: AVISHEV, Viacheslav, Petroskoi 185035 (RU)
(74) Representative: Berggren Oy
(86) International application number: PCT/FI2020/050834
(87) International publication number: WO 2021/123498

(56) References cited:
- CN-A- 106 915 860
- CN-A- 106 915 860
- CN-A- 108 862 810
- KR-A- 20150 050 889
- KR-A- 20150 086 836
- RU-A- 2014 116 542
- RU-C1- 2 075 994
- RU-C1- 2 075 994
- RU-C1- 2 322 608
- RU-C1- 2 701 913
- RU-C2- 2 515 243

## Description

### Technical Field

The invention relates to a method for water purification, in which method water to be purified is directed to flow through a water flow tank, inside which water flow tank impurities are removed from the water using electrolysis. The invention also relates to a device used in the method.

### Background Art

Mechanical, thermal, chemical and electromagnetic methods and methods based on reverse osmosis are widely used in liquids purification in various countries.

Document WO 2008101352 discloses a reusable magnetic device for the extraction of ferrous particles from a body of fluid, wherein the device comprises a plurality of magnets and soft ferrous metal spacers arranged in an alternating sequence to form a stack, adjacent magnets being arranged with like poles facing, a non-magnetic and non-ferrous end piece terminally disposed at a first end of the stack, and a non-magnetic housing that contains the magnets, the spacers and the end piece. The magnetic device can be installed in a vessel to provide a fluid filtering assembly.

Document US 4422934 A discloses a device for magnetically treating liquids to inhibit the deposit of scale in plumbing systems, appliances, boilers, etc. The device has an elongate housing with an inlet and an outlet for the flow of liquid therethrough. A support structure is located inside the housing to retain a plurality of longitudinally spaced-apart magnets. The magnets are held in position by a plurality of transverse holding elements which are positioned so that the magnets are angularly disposed in a helical arrangement. The magnets are directly immersed in the liquid flowing through the device.

In the above-mentioned devices only magnetic fields are applied to the treated liquid, which results in less efficient water treatment.

Document RU 2515243 discloses a method for producing activated water using water electrolysis between two electrodes separated by porous membrane. The electrodes are made of shungite. Ultrasound vibrations are excited in anode and cathode chambers at frequency exceeding cavitation threshold frequency to make 20-100 kHz. As a result, activated shungite water is obtained to stimulate and normalize processes in biological objects.

However, this method can be applied only for drinking water activation, but not for wastewater treatment.

Document RU 2284966 discloses a method and devices of production of drinking water by the cold desalination of the highly mineralized water solutions, mainly seawater. The method includes the multiple fractional ozonation of the incoming water by the small portions of ozone or the ozone-containing mixture in the pulsing electromagnetic fields with the nanosecond fronts. A disadvantage of this method is the electromagnetic impact producing imposition of direct and alternating currents with very high field strength up to 2.5-3 kW/cm, which leads to the increase of water treatment time and power consumption.

Document RU 2543738 discloses a method and device for simultaneous treatment of water by electric and magnetic fields. The water treatment device comprises two oscillating circuits, arranged in such a way that the first circuit inductance is located between the capacitor coating of the second circuit, while the second circuit inductance is located between the capacitor coating of the first circuit. However, the proposed method is energy-intensive without the capability of adjusting power depending on the type of the treated water.

Further examples of water treatment methods and devices are disclosed in RU 2 701 913 C1 and RU 2 075 994 C1.

There are also known technologies of sea water desalination, based on the principles of reverse osmosis or electrodialysis.

An object of the invention is to provide a method and device for water purification, with which the defects relation to the prior art can be reduced. Especially, the invention is aimed to create an environment-friendly and universal method and device for purification of drinking water and industrial and domestic wastewater with minimal energy costs.

The objects of the invention are achieved with a method and device according to the independent patent claims. Some preferred embodiments of the invention are disclosed in the dependent claims.

### Brief summary of the invention

The invention relates to a water purification method, in which method water to be purified is directed to flow through a water flow tank, inside which water flow tank impurities are removed from the water using electrolysis. The water flow tank is at least partially filled with granular filling material comprising crushed shungite mineraloid, a magnetic field embracing the granular filling material is created to activate the electromagnetic and conductive properties of the crushed shungite mineraloid for increasing sorption and catalytic activity in chemical reactions and the water to be purified is directed to flow through said granular filling material. Preferably, the particle size of the crushed shungite mineraloid is 0,1 to 5,0 mm and the carbon content of the crushed shungite mineraloid is 25 to 35 %.

**In** a first preferred embodiment of the method said magnetic field embracing the granular filling material is created with external inductors, which external inductors are arranged around the granular filling material formation and connected to the external inductor control unit. Preferably, said magnetic field embracing the granular filling material is created with wound external inductors coaxially embracing the water flow tank and connected to the external inductor control unit.

**In** a second preferred embodiment of the method a constant voltage is created to said external inductors. Alternatively, a pulsed voltage is created to said external inductors.

**In** yet another preferred embodiment of the method said magnetic field embracing the granular filling material is enhanced with permanent magnets, which permanent magnets are arranged around the granular filling material formation. Preferably, said magnetic field embracing the granular filling material is enhanced with permanent magnets locating outside the water flow tank.

In yet another preferred embodiment of the method the water to be purified is directed to flow through at least one mechanical filter.

The invention further relates to a water purification device comprising an elongate water flow tank, an inlet for the inflow of the water to be purified, an outlet for the outflow of the purified water and electrodes inside said water flow tank for carrying out electrolysis. The water flow tank is at least partially filled with granular filling material comprising crushed shungite mineraloid and said device further comprises means for creating magnetic field embracing said granular filling material. Preferably, the water flow tank is substantially full of tightly packed granular filling material.

In a first preferred embodiment on the device the particle size of the crushed shungite mineraloid is 0,1 to 5,0 mm. Preferably, the carbon content of the crushed shungite mineraloid is 25 to 35 %.

In a second preferred embodiment on the device said granular filling material further comprises crushed zeolite, the particle size of the crushed zeolite being 0,1 to 5,0 mm. Preferably, the ratio of the volumes of shungite and zeolite is 1:1.

In yet another preferred embodiment of the device said means for creating magnetic field comprise an external inductor control unit and external inductors locating around the granular filling material formation and connected to the external inductor control unit. Preferably, said external inductors are wound external inductors coaxially embracing the water flow tank and connected to the external inductor control unit.

In yet another preferred embodiment of the device said electrodes include at least a central electrode near the imaginary central axis of the water flow tank and two side electrodes near the water flow tank side wall.

In yet another preferred embodiment of the device said means for creating magnetic field further include permanent magnets locating around the granular filling material formation. Preferably, said permanent magnets are locating outside the water flow tank.

A yet another preferred embodiment of the device further comprises at least one mechanical filter for removing impurities form the purified water.

In comparison with the known methods of water treatment, the claimed method has a number of advantages:
The invention can be used to purifying water from a wide range of domestic and industrial pollutions, including petroleum products, as well as seawater desalination.

The water can be purified efficiently in one water treatment cycle.

The method can be implemented at moderate costs.

### Brief Description of Drawings

In the following the invention will be described in detail, by way of examples, with reference to the accompanying drawing in which,

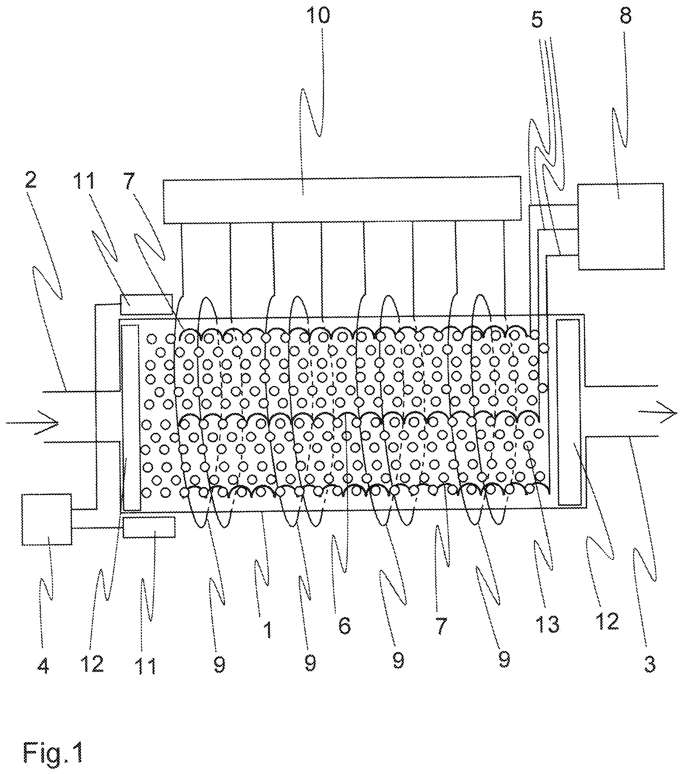

- Fig.1: shows an example of the water purification device according to the invention in a cross-sectional view.

### Detailed Description

In figure 1 an example of the water purification device according to the invention is shown as a cross-sectional view.

The device comprises a cylindrical water flow tank 1 made of polyethylene and propylene. In the first end wall of the tank there is an inlet 2 and in the second end wall there is an outlet 3 for the treated water. The water to be treated is supplied inside the tank through via the inlet and the treated water is removed from the tank through the outlet.

Outside the water flow tank there are four annular magnetic circuits arranged coaxially around the flow tank, The magnetic circuits comprise wound external inductors 9 connected to multichannel external inductor control unit 10. The external inductor control unit creates a rectified pulse voltage. The multichannel external inductor control unit comprises a power supply, broadband generators with frequency and power control, amplifiers, capacitive chains and a control board. It generates white noise on low sound frequencies (20Hz-20kHz), ultrasonic frequencies (20kHz-100kHz), frequencies (100kHz-1MHz) and ultrahigh frequencies (1MHz-1GHz). The external inductors on the tank act as an antenna.

Further, on the outer surface of the water flow tank near the first end wall there are permanent magnets 11 in parallel to each other connected to the permanent magnet control unit 4.

The water flow tank is filled with tightly packed granular filling material 13 comprising crushed shungite mineraloid. The shungite used in the device has a carbon content of 25-35%, total porosity of 0.5-10%, a surface area in the range of 10-60 m²/g and a bulk density of about 1.3 g/cm3. The electrical conductivity of shungite is 1-3 ohms/cm. Shungite is crushed to a fraction size of 0,1-5 mm. The amount of crushed shungite mineraloid may be 100 % or less of the total volume of the granular filling material.

Optionally, instead on using pure crushed shungite inside the water flow tank, a mixture of shungite and zeolite crushed to a fraction of 0.1-5 mm can be used. The ratio of the volumes of shungite and zeolite is preferably 1:1 Using zeolite in addition to shungite is recommended, when chemical water treatment is necessary.

Inside the shungite filled water flow tank 1 there are three wound electrodes connected by internal contacts 5 to electrolysis and electromagnetic field excitation control unit 8. The wound electrodes include a central electrode 6 near the imaginary central axis of the water flow tank and two side electrodes 7 on the opposing sides of the central electrode near the tank side wall. The electrolysis and electromagnetic field excitation control unit comprises a power supply, a generator, an amplifier, a capacitive chain and a control board.

Inside the water flow tank there are two mechanical filters 12. The first filter is next to the first end wall of the water flow tank and the second filter is next to the second end wall of the tank. The water to be treated is directed the flow through the filters when it enters and leaves the water flow tank.

In the claimed invention shungite crystals with electromagnetic and electrically conductive properties are used as an electromagnet. Electrodes placed densely to the shungite provide the possibility of electromagnetic field excitation. According to the claimed method electric current through the electrodes impacts the shungite crystals and forms a lot of intensively closing and opening electric microchains in the shungite layer. This induced polarization is amplified many times in the electromagnetic field due to the dense contact of passing water flow with shungite crystals.

In turn the water flowing through the shungite layer is also exposed to the electromagnetic field and activated. In this case the total electromagnetic effect is carried out by the imposition of direct and alternating currents with adjustable electromagnetic field strength. Control unit of electrolysis and electromagnetic field excitation supplies both a constant and a pulse component of given polarity.

When the magnetic field is applied, crystallization centers are formed in the water mass and insoluble hardness salts are released, and migrating fine slurry appears to be easily removed.

Treating water by magnetic fields manifests its ability to accelerate coagulation, i.e. foreign inclusions fusion and deposition as thin suspensions and turbidity in the water. Physically the phenomenon of coagulation is explained as water impurities are microscopic capacitors with different dielectric permittivity in reference to water. They are polarized at the magnetic field impact. When polarized, inclusions interact with causing this polarization magnetic fields and the resulting force displaces the contaminants from the water. Ferromagnetic substances are removed by the constant magnetic field, diamagnetic substances- by the inhomogeneous magnetic field that promotes non-magnetic particles transformation into magnetic aggregates. At the same time suspended matters, color and turbidity are removed by 95-98%), and viruses and bacteria by 99-100%.

Simultaneous electrolysis impact and induction of electromagnetic field of several types by external sources with the possibility of setting specified frequencies and power results in deep cleaning of wide range impurities.

After electromagnetic treatment water enters a mechanical filter located at the outlet of the cylindrical water flow tank for final purification from impurities.

Thus, during water treatment a part of impurities is deposited on the shungite surface and the other part forming granules is deposited in a mechanical filter located at the outlet of the water flow tank.

Granular filling material pack purification is carried out by simultaneously passing water with a temperature of 70-100 degrees Celsius through the water flow tank and by inducing an electromagnetic field of reverse polarity with impurities deposition on the surface of the shungite particles. These methods make possible shungite regeneration for repeated use.

The proposed method provides an artificial intelligence unit to control the water purification process to determine the impurities composition at the inlet and to make automatic adjustments of generators output signals parameters and the parameters of fields impacting on the passing water stream.

The water to be purified may be drinking water, domestic and/or industrial wastewater or natural water, such as seawater. Natural waters are very diverse in chemical composition. In river water containing 500-600 mg/l of dissolved salts the main impurities are ions of calcium, magnesium, sodium, bicarbonates, sulfates and chlorides. Low-mineralized river waters contain mainly calcium and magnesium ions. The salt content in seawater can reach 150 g/l and an average of 35 g/l. In wastewater the composition and amount of impurities varies in a very wide range, including waste oil products.

Shungite has a rich mineral composition, pronounced sorption, bactericidal, catalytic properties, and it has been used in drinking water purification and activation systems for a long time. The main component of shungite is carbon. Its content in the rock can reach up to 99%. The mineral composition of shungite besides carbon (C60) contains silicon oxide and aluminum oxide, the rest of the mineral composition of shungite contains more than 20 macro- and microelements. A unique feature of shungite is that only the most useful mineral components of this rock enter the water environment at interaction.

Mineral shungite has high mechanical strength, electrical conductivity, and chemical resistance. Shungite was noted as an adsorbent of different organic substances: phenols, fatty high- molecular acids, alcohols, substances of the lingocarbon complex of wood and peat hydrolysates, water-soluble hydrolysis resins, humic substances, etc., as well as a number of gases. After filtering through shungite the water color is reduced, microflora is almost completely removed, and coli-index is reduced to zero. To improve the sorption and catalytic properties of water a number of methods are used to modify shungite: washing in boiling water, in alkaline solutions and so on, depending on the treated liquid. The number of silanol and carboxyl centers which determine the efficiency of sorption and catalytic properties of the material increases on the shungite surface due to the processing.

Using the mineral shungite as an electromagnetic field amplifier contributes a more effective magnetic field impact on calcium carbonates and sulfates, magnesium hydroxides and calcium silicates in treated water solution. Constant component of the electric current causes aqueous composition electrolysis with the release and deposition of a wide range of impurities. For more efficient electrolysis the constant component can be supplied in a pulse mode. Ferromagnetic or paramagnetic inclusions are retained in a constant magnetic field and settle on shungite crystals. Magnetic field intensity vector causes the water ability to accelerate coagulation.

In the course of water treatment experiments it was found that:
- The required power of control units depending on the pollution characteristics is 150-400W/ m3 water.
- Control units generators allow producing electromagnetic field frequencies from the units of Hz to MHz, also installation of white noise generators with a wide range of frequencies is possible.
- The stable cavitation stage with bubbles occurs when ultrasonic vibrations are excited with the frequency above the frequency of the cavitation threshold in the range from 20 kHz to 100 kHz, and the intensity of the said ultrasound lies in the region of stable cavitation from 1.5 W/cm2 to 2,5 W/cm2.
- The resonance frequency of molecular coupling for the source water (sea water) with the salt content of 0.3-5 g/l is 3.5-8.5 kHz, at concentrations from 5 to 35 g/l -from 10 to 38kHz.
- Selecting the ratio of electrostatic field in combination with the regulated electromagnetic and microwave fields the total energy consumption could be an order smaller than that if only ultrasound is used. This substantiates the usage of a multichannel white noise generator with frequencies up to 1 GHz.

The proposed invention due to simultaneous impact of permanent magnets and electromagnets and/or electrolysis, as well as the possibility of chemical water treatment allows to increase the efficiency of water purification from a wide range of impurities, which ensures the universality of the claimed method. Shungite activation enhancing its electromagnetic and conductive properties, sorption and catalytic activity in chemical reactions due to large contact area of crushed shungite and passing water flow can significantly reduce the power costs.

Some preferred embodiments of the method and device has been disclosed above. The invention is not limited to the solutions explained above, but the invention can be applied in different ways within the limits set by the patent claims.

### Reference Signs:

- 1: water flow tank
- 2: inlet
- 3: outlet
- 4: permanent magnet control unit
- 5: contact
- 6: central electrode
- 7: side electrode
- 8: field excitation control unit
- 9: external inductor
- 10: external inductor control unit
- 11: permanent magnet
- 12: mechanical filter
- 13: granular filling material

## Claims

1. A method for water purification, in which method water to be purified is directed to flow through a water flow tank (1) inside which water flow tank (1) impurities are removed from the water using electrolysis, **characterized in that** the water flow tank (1) is at least partially filled with granular filling material comprising crushed shungite mineraloid, a magnetic field embracing the granular filling material is created to activate the electromagnetic and conductive properties of the crushed shungite mineraloid for increasing sorption and catalytic activity in chemical reactions and the water to be purified is directed to flow through said granular filling material.

2. A method according to claim 1, **characterized in that** said magnetic field embracing the granular filling material is created with external inductors (9), which external inductors are arranged around the granular filling material formation and connected to the external inductor control unit (10).

3. A method according to claim 1 or 2, **characterized in that** the water flow tank (1) is cylindrical and said magnetic field embracing the granular filling material is created with wound external inductors (9) coaxially embracing the water flow tank (1) and connected to the external inductor control unit (10).

4. A method according to claim 2 or 3, **characterized in that** a constant voltage or pulsed voltage is created to said external inductors (9).

5. A method according to any of the claims 1 to 4, **characterized in that** said magnetic field embracing the granular filling material is enhanced with permanent magnets (4), which permanent magnets are arranged around the granular filling material formation.

6. A method according to any of the claims 1 to 5, **characterized in that** said magnetic field embracing the granular filling material is enhanced with permanent magnets (4) locating outside the water flow tank (1).

7. A device for water purification comprising an elongate water flow tank (1), an inlet (2) for the inflow of the water to be purified, an outlet (3) for the outflow of the purified water and electrodes (6, 7) inside said water flow tank (1) for carrying out electrolysis, **characterized in that**, the water flow tank (1) is at least partially filled with granular filling material comprising crushed shungite mineraloid and said device further comprises means for creating magnetic field embracing said granular filling material.

8. A device according to claim 7, **characterized in that**, the particle size of the crushed shungite mineraloid is 0,1 to 5,0 mm.

9. A device according to any of the claims 7 or 8, **characterized in that** said granular filling material further comprises crushed zeolite, the particle size of the crushed zeolite being 0,1 to 5,0 mm.

10. A device according to any of the claims 7 to 9, **characterized in that** said means for creating magnetic field comprise an external inductor control unit (10) and external inductors (9) locating around the granular filling material formation and connected to the external inductor control unit (10).

11. A device according to any of the claims 7 to 10, **characterized in that** the water flow tank (1) is cylindrical and said means for creating magnetic field comprise an external inductor control unit (10) and wound external inductors (9) coaxially embracing the water flow tank (1) and connected to the external inductor control unit (10).

12. A device according to any of the claims 7 to 11, **characterized in that** said electrodes include at least a central electrode (6) near the imaginary central axis of the water flow tank (1) and two side electrodes (7) near the water flow tank (1) side wall.

13. A device according to any of the claim 7 to 12, **characterized in that** said means for creating magnetic field further include permanent magnets (4) locating around the granular filling material formation, preferably outside the water flow tank (1).

14. A device according to any of the claims 7 to 13, **characterized in that** it further comprises at least one mechanical filter (12) for removing impurities form the purified water.

## Patentansprüche

1. Verfahren zur Wasserreinigung, bei dem das zu reinigende Wasser durch einen Wasserdurchflussbehälter (1) strömt und in dem Wasserdurchflussbehälter (1) mittels Elektrolyse Verunreinigungen aus dem Wasser entfernt werden, **dadurch gekennzeichnet, dass** der Wasserdurchflussbehälter (1) zumindest teilweise mit körnigem Füllmaterial gefüllt ist, das zerkleinertes Schungit-Mineraloid umfasst, ein das körnige Füllmaterial umgebendes Magnetfeld erzeugt wird, um die elektromagnetischen und leitfähigen Eigenschaften des zerkleinerten Schungit-Mineraloids zur Steigerung der Sorption und katalytischen Aktivität bei chemischen Reaktionen zu aktivieren, und das zu reinigende Wasser so geleitet wird, dass es durch das körnige Füllmaterial fließt.

2. Verfahren nach Anspruch 1, **dadurch gekennzeichnet, dass** das das körnige Füllmaterial umgebende Magnetfeld mit externen Induktoren (9) erzeugt wird, die um die körnige Füllmaterialformation herum angeordnet und mit der externen Induktor-Steuereinheit (10) verbunden sind.

3. Verfahren nach Anspruch 1 oder 2, **dadurch gekennzeichnet, dass** der Wasserdurchflussbehälter (1) zylindrisch ist und das das körnige Füllmaterial umgebende Magnetfeld mit gewickelten Außeninduktoren (9) erzeugt wird, die den Wasserdurchflussbehälter (1) koaxial umschließen und mit der Außeninduktor-Steuereinheit (10) verbunden sind.

4. Verfahren nach Anspruch 2 oder 3, **dadurch gekennzeichnet, dass** an den externen Induktoren (9) eine konstante oder gepulste Spannung angelegt wird.

5. Verfahren nach einem der Ansprüche 1 bis 4, **dadurch gekennzeichnet, dass** das das körnige Füllmaterial umgebende Magnetfeld durch Permanentmagnete (4) verstärkt wird, die um die körnige Füllmaterialformation herum angeordnet sind.

6. Verfahren nach einem der Ansprüche 1 bis 5, **dadurch gekennzeichnet, dass** das das körnige Füllmaterial umgebende Magnetfeld durch außerhalb des Wasserdurchflussbehälters (1) angeordnete Permanentmagnete (4) verstärkt wird.

7. Vorrichtung zur Wasserreinigung, die einen länglichen Wasserdurchflussbehälter (1), einen Einlass (2) für den Zufluss des zu reinigenden Wassers, einen Auslass (3) für den Abfluss des gereinigten Wassers und Elektroden (6, 7) im Inneren des Wasserdurchflussbehälters (1) zur Durchführung der Elektrolyse umfasst, **dadurch gekennzeichnet, dass** der Wasserdurchflussbehälter (1) zumindest teilweise mit körnigem Füllmaterial gefüllt ist, das zerkleinertes Schungit-Mineraloid umfasst, und dass die Vorrichtung ferner Mittel zum Erzeugen eines Magnetfelds umfasst, das das körnige Füllmaterial umgibt.

8. Vorrichtung nach Anspruch 7, **dadurch gekennzeichnet, dass** die Partikelgröße des zerkleinerten Schungit-Mineraloids 0,1 bis 5,0 mm beträgt.

9. Vorrichtung nach einem der Ansprüche 7 oder 8, **dadurch gekennzeichnet, dass** das körnige Füllmaterial zusätzlich zerkleinerten Zeolith enthält, dessen Partikelgröße 0,1 bis 5,0 mm beträgt.

10. Vorrichtung nach einem der Ansprüche 7 bis 9, **dadurch gekennzeichnet, dass** die Mittel zur Erzeugung eines Magnetfelds eine externe Induktor-Steuereinheit (10) und externe Induktoren (9) umfassen, die um die körnige Füllmaterialformation herum angeordnet und mit der externen Induktor-Steuereinheit (10) verbunden sind.

11. Vorrichtung nach einem der Ansprüche 7 bis 10, **dadurch gekennzeichnet, dass** der Wasserdurchflussbehälter (1) zylindrisch ist und die Mittel zur Erzeugung eines Magnetfelds eine externe Induktor-Steuereinheit (10) und gewickelte externe Induktoren (9) umfassen, die den Wasserdurchflussbehälter (1) koaxial umschließen und mit der externen Induktor-Steuereinheit (10) verbunden sind.

12. Vorrichtung nach einem der Ansprüche 7 bis 11, **dadurch gekennzeichnet, dass** die Elektroden mindestens eine Mittelelektrode (6) nahe der imaginären Mittelachse des Wasserdurchflussbehälters (1) und zwei Seitenelektroden (7) nahe der Seitenwand des Wasserdurchflussbehälters (1) umfassen.

13. Vorrichtung nach einem der Ansprüche 7 bis 12, **dadurch gekennzeichnet, dass** die Mittel zur Erzeugung eines Magnetfelds ferner Permanentmagnete (4) umfassen, die um die körnige Füllmaterialformation herum, vorzugsweise außerhalb des Wasserdurchflussbehälters (1) angeordnet sind.

14. Eine Vorrichtung nach einem der Ansprüche 7 bis 13, **dadurch gekennzeichnet, dass** sie ferner mindestens einen mechanischen Filter (12) zur Entfernung von Verunreinigungen aus dem gereinigten Wasser umfasst.

## Revendications

1. Procédé de purification d'eau, dans lequel de l'eau à purifier est dirigée pour s'écouler à travers un réservoir d'écoulement d'eau (1) à l'intérieur duquel le réserver d'écoulement d'eau (1) élimine les impuretés de l'eau par électrolyse, **caractérisé en ce que** le réservoir d'écoulement d'eau (1) est au moins partiellement rempli d'un matériau de remplissage granulaire comprenant du minéraloïde de shungite concassé, un champ magnétique englobant le matériau de remplissage granulaire est créé pour activer les propriétés électromagnétiques et conductrices du minéraloïde de shungite concassé destiné à augmenter la sorption et l'activité catalytique dans des réactions chimiques et l'eau à purifier est dirigée pour s'écouler à travers ledit matériau de remplissage granulaire.

2. Procédé selon la revendication 1, **caractérisé en ce que** ledit champ magnétique englobant le matériau de remplissage granulaire est créé avec des inducteurs externes (9), lesquels inducteurs externes sont disposés autour de la formation de matériau de remplissage granulaire et reliés à l'unité de commande d'inducteur externe (10).

3. Procédé selon la revendication 1 ou 2, **caractérisé en ce que** le réservoir d'écoulement d'eau (1) est cylindrique et ledit champ magnétique englobant le matériau de remplissage granulaire est créé avec des inducteurs externes (9) enroulés englobant coaxialement le réservoir d'écoulement d'eau (1) et reliés à l'unité de commande d'inducteur externe (10).

4. Procédé selon la revendication 2 ou 3, **caractérisé en ce qu'**une tension constante ou une tension pulsée est créée sur lesdits inducteurs externes (9).

5. Procédé selon l'une quelconque des revendications 1 à 4, **caractérisé en ce que** ledit champ magnétique englobant le matériau de remplissage granulaire est renforcé par des aimants permanents (4), lesquels aimants permanents sont disposés autour de la formation de matériau de remplissage granulaire.

6. Procédé selon l'une quelconque des revendications 1 à 5, **caractérisé en ce que** ledit champ magnétique englobant le matériau de remplissage granulaire est renforcé par des aimants permanents (4) situés à l'extérieur du réservoir d'écoulement d'eau (1).

7. Dispositif de purification d'eau comprenant un réservoir d'écoulement d'eau (1) allongé, une entrée (2) pour l'arrivée de l'eau à purifier, une sortie (3) pour la sortie de l'eau purifiée et des électrodes (6, 7) à l'intérieur dudit réservoir d'écoulement d'eau (1) destinés à effectuer l'électrolyse, **caractérisé en ce que** le réservoir d'écoulement d'eau (1) est au moins partiellement rempli d'un matériau de remplissage granulaire comprenant du minéraloïde de shungite concassé et ledit dispositif comprend en outre un moyen de création de champ magnétique englobant ledit matériau de remplissage granulaire.

8. Dispositif selon la revendication 7, **caractérisé en ce que** la taille des particules du minéraloïde de shungite concassé est de 0,1 à 5,0 mm.

9. Dispositif selon l'une quelconque des revendications 7 ou 8, **caractérisé en ce que** ledit matériau de remplissage granulaire comprend en outre de la zéolite concassée, la taille des particules de la zéolite concassée étant de 0,1 à 5,0 mm.

10. Dispositif selon l'une quelconque des revendications 7 à 9, **caractérisé en ce que** ledit moyen de création de champ magnétique comprend une unité de commande d'inducteur externe (10) et des inducteurs externes (9) situés autour de la formation de matériau de remplissage granulaire et reliés à l'unité de commande d'inducteur externe (10).

11. Dispositif selon l'une quelconque des revendications 7 à 10, **caractérisé en ce que** le réservoir d'écoulement d'eau (1) est cylindrique et ledit moyen de création de champ magnétique comprend une unité de commande d'inducteur externe (10) et des inducteurs externes (9) enroulés englobant coaxialement le réservoir d'écoulement d'eau (1) et reliés à l'unité de commande d'inducteur externe (10).

12. Dispositif selon l'une quelconque des revendications 7 à 11, **caractérisé en ce que** lesdites électrodes comprennent au moins une électrode centrale (6) à proximité de l'axe central imaginaire du réservoir d'écoulement d'eau (1) et deux électrodes latérales (7) à proximité de la paroi latérale du réservoir d'écoulement d'eau (1).

13. Dispositif selon l'une quelconque des revendications 7 à 12, **caractérisé en ce que** ledit moyen de création de champ magnétique comprend en outre des aimants permanents (4) situés autour de la formation de matériau de remplissage granulaire, de préférence à l'extérieur du réservoir d'écoulement d'eau (1).

14. Dispositif selon l'une quelconque des revendications 7 à 13, **caractérisé en ce qu'**il comprend en outre au moins un filtre mécanique (12) destiné à éliminer les impuretés de l'eau purifiée.
